# FASCICULE DE BREVET EUROPEEN

(11) **EP 2 770 240 B1**
(45) Date de publication et mention de la délivrance du brevet: **14.10.2015**
(21) Numéro de dépôt: 14154135.9
(22) Date de dépôt: 06.02.2014
(51) Int. Cl.: F17C 13/04, G05D 16/10

(54) **Détendeur de pression, robinet et bouteille munis d'un tel détendeur**
Druckentspanner, sowie Ventile und Flasche mit solch einem Entspranner
Pressure reducer, valve and bottle comprising such a reducer

(30) Priorité: 26.02.2013 FR 1351673
(43) Date de publication de la demande: 27.08.2014
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Collado, Pedro, 77330 Ozoir la Ferriere (FR); Germani, Damien, 75015 Paris (FR); Rudnianyn, Philippe, 91700 Villiers sur Orge (FR)
(74) Mandataire: De Cuenca, Emmanuel Jaime

(56) Documents cités:
- WO-A1-98/30859
- WO-A2-2007/149882
- FR-A1- 2 706 052
- US-A1- 2012 080 101

## Description

La présente invention concerne un détendeur de pression pour gaz comprimé ainsi qu'un robinet et une bouteille de gaz sous pression comprenant un tel détendeur.

L'invention concerne plus particulièrement un détendeur de pression pour gaz comprimé, notamment pour robinet de bouteille de gaz sous pression, comprenant un corps abritant un circuit de gaz comprenant une entrée destinée à être mise en communication avec du gaz à haute pression et une sortie destinée à être reliée à un circuit aval, le circuit de gaz comprenant un mécanisme de détente de la pression du gaz entre l'entrée et la sortie à un niveau de pression déterminé, le mécanisme de détente comprenant un piston de détente mobile dans le corps et délimitant de façon étanche une chambre de détente via un joint, le piston de détente étant mobile en translation selon une direction amont/aval et sollicité par un premier organe de rappel, le détenteur comprenant une soupape de sécurité permettant d'éviter une montée de la pression dans la chambre de détente au-delà d'un seuil déterminé, la soupape de sécurité comprenant un orifice d'évacuation pour le gaz, l'orifice d'évacuation étant sélectivement en communication avec la chambre de détente lorsque le piston de détente atteint une position aval limite déterminée sous l'effet de la pression dans la chambre de détente.

L'invention concerne notamment les détendeurs de pression gazeux à piston intégrant une soupape de sécurité au niveau du piston de détente.

Un tel détendeur est décrit pas exemple dans le document FR2706052A1.

Un tel dispositif permet d'évacuer le gaz en cas de surpression anormale dans la chambre de détente délimitée par le piston de détente.

Ce dispositif connu présente cependant des inconvénients. Ainsi, le joint d'étanchéité du piston de détente peut subir une extrusion dans certaines configurations de d'ouverture de cette soupape (par exemple du fait d'un frottement du joint contre le piston de détente lors d'une course relativement importante du piston à une pression élevée).

Un but de la présente invention est de pallier tout ou partie des inconvénients de l'art antérieur relevés ci-dessus.

A cette fin, le détendeur de pression selon l'invention, par ailleurs conforme à la définition générique qu'en donne le préambule ci-dessus, est essentiellement caractérisé en ce que le joint est disposé dans un logement fixe du corps et coopère en étanchéité avec le piston de détente lorsque le piston de détente n'a pas atteint sa position aval limite déterminée.

Par ailleurs, des modes de réalisation de l'invention peuvent comporter l'une ou plusieurs des caractéristiques suivantes :
- le joint est disposé dans un logement situé, selon la direction amont/aval, en amont de l'orifice d'évacuation,
- lorsque le piston de détente atteint la position aval limite déterminée, le joint ne coopère plus en étanchéité avec le piston de détente et ménage un passage pour le gaz entre la chambre de détente et l'orifice d'évacuation,
- le joint est torique et coopère sélectivement en étanchéité avec une surface extérieure cylindrique du piston de détente,
- le mécanisme de détente comprend un clapet de détente mobile en translation selon la direction amont/aval relativement à un siège, le clapet de détente étant sollicité vers l'aval en direction du siège via un second organe de rappel, le piston de détente étant sollicité vers l'amont par le premier organe de rappel pour transmettre un effort sur le clapet de détente opposé à l'effort du second organe de rappel,

L'invention concerne également un robinet de bouteille de gaz sous pression comprenant un détendeur de pression intégré ou rapporté de façon amovible sur le robinet, le détendeur étant conforme à l'une quelconque des caractéristiques ci-dessus ou ci-dessous.

L'invention concerne également une bouteille de gaz sous pression comprenant un tel robinet.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe, schématique et partielle d'un détendeur de pression selon un exemple de réalisation de l'invention,
- les figures 2 et 3 représentent des vues en coupe partielles et schématiques d'un détail du détendeur de la figure 1 selon respectivement deux configurations de fonctionnement (soupape de sécurité fermée à la figure 2 et soupape de sécurité ouverte à la figure 3),
- la figure 4 représente une vue schématique et partielle d'un exemple d'une bouteille de gaz munie d'un robinet comprenant un tel détendeur.

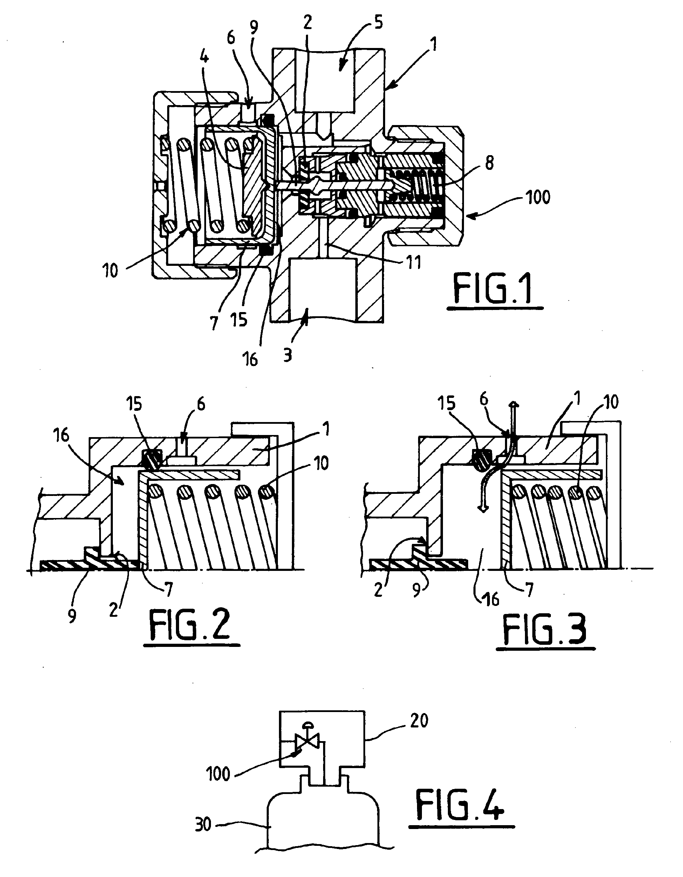

L'exemple de détendeur 100 de pression illustré à la figure 1 comprend un corps 1 abritant un circuit 11 de gaz comprenant une entrée 3 destinée à être mise en communication avec du gaz à haute pression et une sortie 5 destinée à être reliée à un circuit aval pour fournir du gaz à la pression réduite déterminée.

Le circuit 11 de gaz comprend un mécanisme de détente de la pression du gaz entre l'entrée 3 et la sortie 5 à un niveau de pression déterminé (fixe ou réglable).

Le mécanisme de détente comprend classiquement un piston 7 de détente mobile dans le corps 1 et délimitant de façon étanche une chambre 16 de détente via un joint 15. Le piston 7 de détente est mobile en translation selon une direction amont/aval et est sollicité vers l'amont par un premier organe 10 de rappel tel qu'un ressort. Comme illustré, une coupelle 4 intermédiaire peut être disposée entre le ressort 10 et le piston 7 de détente.

Le mécanisme de détente comprend également un clapet 9 de détente mobile en translation selon la direction amont/aval relativement à un siège 2. Le clapet 9 de détente est sollicité vers l'aval en direction du siège 2 via un second organe 8 de rappel tel qu'un ressort.

Le piston 7 de détente est en contact avec une extrémité du clapet 9 de détente. Le piston 10 de détente est sollicité vers l'amont par le premier organe 10 de rappel pour transmettre un effort sur le clapet 9 de détente opposé à l'effort du second organe de rappel 8. L'équilibre des efforts antagonistes de l'ensemble assure une ouverture du siège 2 générant une détente de la pression du gaz à une valeur déterminée fixe ou réglable.

Bien entendu, d'autres mécanismes de détente peuvent être envisagés et le reste de la structure du mécanisme de détente représenté à la figure 1 ne sera pas décrite plus en détail par soucis de concision.

Le détenteur 100 comprend également une soupape de sécurité permettant d'éviter une montée de la pression dans la chambre 16 de détente au-delà d'un seuil déterminé, par exemple de 5,5bar. De plus, de préférence le débit de ladite soupape doit préserver inférieure ou égale à 10bar en aval.

La soupape de sécurité comprend un orifice 6 d'évacuation pour le gaz mis en relation sélectivement avec la chambre 16 de détente lorsque le piston 7 de détente atteint une position aval limite déterminée sous l'effet de la pression dans la chambre 16 de détente (cf. figure 3).

Selon une caractéristique avantageuse, ledit joint 15 est disposé dans un logement fixe du corps 1 et coopère en étanchéité avec le piston 7 de détente lorsque le piston 7 de détente n'a pas atteint sa position aval limite déterminée (cf. figure 2).

Cette configuration diminue ou supprime les risques d'extrusion du joint 15.

De plus cette structure permet de diminuer de façon significative l'hystérésis d'ouverture/fermeture du passage vers l'orifice 6 d'évacuation. C'est-à-dire que le passage de d'un état ouvert à un état fermé est plus rapide et plus immédiat.

Le diamètre intérieur du joint 15 assure l'étanchéité sur la circonférence extérieure du piston 7. La section de passage pour le gaz est augmentée en position ouverte. Les frottements sont diminués.

De plus, cette configuration nécessite une course de piston 7 de détente relativement faible pour le passage de l'état étanche (fermé figure 2) à l'état non étanche (ouvert figure 3) et inversement.

Comme illustré, de préférence le joint 15 est disposé dans un logement (rainure ou gorge circulaire par exemple) situé, selon la direction amont/aval, en amont de l'orifice 17 d'évacuation.

De plus, lorsque le piston 7 de détente atteint la position aval limite déterminée, le joint 15 ne coopère plus en étanchéité avec le piston 7 de détente et ménage un passage pour le gaz entre la chambre 16 de détente et l'orifice 6 d'évacuation.

Le joint 15 est de préférence torique et coopère sélectivement en étanchéité avec une surface extérieure cylindrique du piston 7 de détente.

## Revendications

1. Détendeur de pression pour gaz comprimé, notamment pour robinet de bouteille de gaz sous pression, comprenant un corps (1) abritant un circuit (11) de gaz comprenant une entrée (3) destinée à être mise en communication avec du gaz à haute pression et une sortie (5) destinée à être reliée à un circuit aval, le circuit (11) de gaz comprenant un mécanisme de détente de la pression du gaz entre l'entrée (3) et la sortie (5) à un niveau de pression déterminé, le mécanisme de détente comprenant un piston (7) de détente mobile dans le corps (1) et délimitant de façon étanche une chambre (16) de détente via un joint (15), le piston (7) de détente étant mobile en translation selon une direction amont/aval et sollicité par un premier organe (10) de rappel, le détenteur (100) comprenant une soupape de sécurité permettant d'éviter une montée de la pression dans la chambre (16) de détente au-delà d'un seuil déterminé, la soupape de sécurité comprenant un orifice (6) d'évacuation pour le gaz, l'orifice (6) d'évacuation étant sélectivement en communication avec la chambre (16) de détente lorsque le piston (7) de détente atteint une position aval limite déterminée sous l'effet de la pression dans la chambre (16) de détente, **caractérisé en ce que** le joint (15) est disposé dans un logement fixe du corps (1) et coopère en étanchéité avec le piston (7) de détente lorsque le piston (7) de détente n'a pas atteint sa position aval limite déterminée.

2. Détendeur selon la revendication 1, **caractérisé en ce que** le joint (15) est disposé dans un logement situé, selon la direction amont/aval, en amont de l'orifice (17) d'évacuation.

3. Détendeur selon la revendication 1 ou 2, **caractérisé en ce que**, lorsque le piston (7) de détente atteint la position aval limite déterminée, le joint (15) ne coopère plus en étanchéité avec le piston (7) de détente et ménage un passage pour le gaz entre la chambre (16) de détente et l'orifice (6) d'évacuation.

4. Détendeur selon l'une quelconque des revendications 1 à 3, **caractérisé en ce que** le joint (15) est torique et coopère sélectivement en étanchéité avec une surface extérieure cylindrique du piston (7) de détente.

5. Détendeur selon l'une quelconque des revendications 1 à 4, **caractérisé en ce que** le mécanisme de détente comprend un clapet (9) de détente mobile en translation selon la direction amont/aval relativement à un siège (2), le clapet (9) de détente étant sollicité vers l'aval en direction du siège (2) via un second organe (8) de rappel, le piston (10) de détente étant sollicité vers l'amont par le premier organe (10) de rappel pour transmettre un effort sur le clapet (9) de détente opposé à l'effort du second organe de rappel (8).

6. Robinet de bouteille de gaz sous pression comprenant un détendeur (100) de pression intégré ou rapporté de façon amovible sur le robinet (20), **caractérisé en ce que** le détendeur (100) est conforme à l'une quelconque des revendications 1 à 5.

7. Bouteille de gaz sous pression comprenant un robinet conforme à la revendication 6.

## Patentansprüche

1. Druckentlastungsventil für Druckgas, insbesondere für einen Hahn für eine Druckgasflasche, das einen Körper (1) aufweist, der einen Gaskreislauf (11) aufnimmt, der einen Einlass (3) aufweist, der dazu bestimmt ist, mit Hochdruckgas in Kommunikation gebracht zu werden, und einen Auslass (5) aufweist, der dazu bestimmt ist, mit einem stromabwärtigen Kreislauf verbunden zu werden, wobei der Gaskreislauf (11) einen Mechanismus zur Entlastung des Gasdrucks zwischen dem Einlass (3) und dem Auslass (5) auf ein bestimmtes Druckniveau aufweist, wobei der Entlastungsmechanismus einen Entlastungskolben (7) aufweist, der in dem Körper (1) beweglich ist und über ein Dichtelement (15) eine Entlastungskammer (16) abdichtend begrenzt, wobei der Entlastungskolben (7) in einer stromaufwärtigen/stromabwärtigen Richtung in Translation beweglich ist und durch ein erstes Rückstellorgan (10) beaufschlagt wird, wobei das Entlastungsventil (100) ein Sicherheitsventil zum Verhindern eines Anstiegs des Drucks in der Entlastungskammer (16) über einen bestimmten Schwellenwert hinaus aufweist, wobei das Sicherheitsventil eine Ablassöffnung (6) für das Gas aufweist, wobei die Ablassöffnung (6) mit der Entlastungskammer (16) selektiv in Kommunikation ist, wenn der Entlastungskolben (7) unter der Einwirkung des Drucks in der Entlastungskammer (16) eine bestimmte stromabwärtige Grenzposition erreicht, **dadurch gekennzeichnet, dass** das Dichtelement (15) in einer ortsfesten Aufnahme des Körpers (1) angeordnet ist und mit dem Entlastungskolben (7) abdichtend zusammenwirkt, wenn der Entlastungskolben (7) seine bestimmte stromabwärtige Grenzposition nicht erreicht hat.

2. Entlastungsventil nach Anspruch 1, **dadurch gekennzeichnet, dass** das Dichtelement (15) in einer Aufnahme angeordnet ist, die sich in der stromaufwärtigen/stromabwärtigen Richtung stromaufwärts der Ablassöffnung (17) befindet.

3. Entlastungsventil nach Anspruch 1 oder 2, **dadurch gekennzeichnet, dass**, wenn der Entlastungskolben (7) die bestimmte stromabwärtige Grenzposition erreicht, das Dichtelement (15) mit dem Entlastungskolben (7) nicht mehr abdichtend zusammenwirkt und einen Durchgang für das Gas zwischen der Entlastungskammer (16) und der Ablassöffnung (6) bildet.

4. Entlastungsventil nach einem der Ansprüche 1 bis 3, **dadurch gekennzeichnet, dass** das Dichtelement (15) ein O-Ring ist und selektiv mit einer zylindrischen Außenfläche des Entlastungskolbens (7) abdichtend zusammenwirkt.

5. Entlastungsventil nach einem der Ansprüche 1 bis 4, **dadurch gekennzeichnet, dass** der Entlastungsmechanismus eine Entspannungsklappe (9) aufweist, die in der stromaufwärtigen/stromabwärtigen Richtung relativ zu einem Sitz (2) in Translation beweglich ist, wobei die Entspannungsklappe (9) über ein zweites Rückstellorgan (8) stromabwärts in Richtung des Sitzes (2) beaufschlagt wird, wobei der Entlastungskolben (10) durch das erste Rückstellorgan (10) stromaufwärts beaufschlagt wird, um eine Kraft auf die Entspannungsklappe (9) zu übertragen, die der Kraft des zweiten Rückstellorgans (8) entgegengesetzt ist.

6. Hahn für eine Druckgasflasche, der ein Entlastungsventil (100) aufweist, das integriert ist oder lösbar an dem Hahn (20) angebracht ist, **dadurch gekennzeichnet, dass** das Entlastungsventil (100) einem der Ansprüche 1 bis 5 entspricht.

7. Druckgasflasche, die einen Hahn nach Anspruch 6 aufweist.

## Claims

1. Pressure reducing valve for compressed gas, in particular for a pressurised gas bottle tap, comprising a body (1) housing a gas circuit (11) comprising an inlet (3) intended to be put in communication with high-pressure gas and an outlet (5) intended to be connected to a downstream circuit, the gas circuit (11) comprising a mechanism for reducing the pressure of the gas between the inlet (3) and the outlet (5) to a predetermined pressure level, the reduction mechanism comprising a reduction piston (7) which is movable in the body (1) and sealingly delimits a reduction chamber (16) via a seal (15), the reduction piston (7) being able to move in translation in an upstream/downstream direction and being biased by a first return member (10), the pressure reducing valve (100) comprising a safety valve for preventing a rise in the pressure in the reduction chamber (16) beyond a predetermined threshold, the safety valve comprising a discharge orifice (6) for the gas, the discharge orifice (6) being selectively in communication with the reduction chamber (16) when the reduction piston (7) reaches a predetermined downstream limit position under the effect of the pressure in the reduction chamber (16), **characterised in that** the seal (15) is disposed in a stationary housing of the body (1) and cooperates sealingly with the reduction piston (7) when the reduction piston (7) has not reached its predetermined downstream limit position.

2. Pressure reducing valve according to claim 1, **characterised in that** the seal (15) is disposed in a housing situated upstream of the discharge orifice (17) in the upstream/downstream direction.

3. Pressure reducing valve according to either claim 1 or claim 2, **characterised in that**, when the reduction piston (7) reaches the predetermined downstream limit position, the seal (15) no longer cooperates sealingly with the reduction piston (7) and provides a passage for the gas between the reduction chamber (16) and the discharge orifice (6).

4. Pressure reducing valve according to any of claims 1 to 3, **characterised in that** the seal (15) is toroidal and selectively cooperates sealingly with a cylindrical external surface of the reduction piston (7).

5. Pressure reducing valve according to any of claims 1 to 4, **characterised in that** the reduction mechanism comprises a reduction shutter (9) which is able to move in translation in the upstream/downstream direction relative to a seat (2), the reduction shutter (9) being biased downstream in the direction of the seat (2) by means of a second return member (8), the reduction piston (10) being biased upstream by the first return member (10) in order to transmit to the reduction shutter (9) a force opposite to the force of the second return member (8).

6. Pressurised gas bottle tap comprising a pressure reducing valve (100) integrated or attached removably to the tap (20), **characterised in that** the pressure reducing valve (100) according to any of claims 1 to 5.

7. Pressurised gas bottle comprising a tap according to claim 6.
